# EUROPÄISCHE PATENTSCHRIFT

(11) **EP 1 110 882 B1**
(45) Veröffentlichungstag und Bekanntmachung des Hinweises auf die Patenterteilung: **02.01.2003**
(21) Anmeldenummer: 00124873.1
(22) Anmeldetag: 15.11.2000
(51) Int. Cl.: B65G 15/58, B65G 21/20

(54) **Saugfördergurt**
Suction conveyor belt
Conveyeur à succion

(30) Priorität: 18.12.1999 DE 29922248 U
(43) Veröffentlichungstag der Anmeldung: 27.06.2001
(73) Patentinhaber: Neuhäuser GmbH, 44532 Lünen (DE)
(72) Erfinder: Janzen, Klaus, 44534 Lünen (DE)
(74) Vertreter: Nunnenkamp, Jörg, Dr.

(56) Entgegenhaltungen:
- EP-A- 0 893 371
- DE-U- 29 905 390

## Beschreibung

Die Erfindung betrifft einen Fördergurt zum insbesondere hängenden Unterdrucktransport von Werkstücken wie Blechen oder Platten, mit einem Gurtkörper mit Ansaugöffnungen, welche mit einer Unterdruckvorrichtung in Verbindung stehen, und mit frontseitigen Saugausformungen, welche zumindest in Transportrichtung der Werkstücke Überhanglappen mit zurückspringenden Lippen aufweisen. - Selbstverständlich eignet sich der vorgenannte Fördergurt auch für einen aufliegenden Unterdrucktransport, welcher zudem durch eine magnetische Anziehung der Werkstücke flankiert sein kann. Derartiges wird grundsätzlich in der EP 0 893 372 A1 beschrieben.

Ein Fördergurt der eingangs beschriebenen Ausgestaltung wird im Rahmen des Gebrauchsmusters DE 299 05 390 U1 beschrieben. Ähnliche Ausführungsformen finden sich in der Offenlegungsschrift DE 196 53 381 A1. Insbesondere das erstgenannte Gebrauchsmuster wirft Probleme beim Transport von beispielsweise Aluplatten auf. So sind hier die zurückspringenden Lippen durchgängig an die jeweils kreisrunden Saugausformungen angeformt, um eine Beschädigung oder sogar ein Abscheren der Saugausformungen in Verbindung mit zusätzlichen Kontaktleisten auf dem Gurtkörper zu verhindern.

Derartiges mag zwar gelingen, dafür bildet sich hier jedoch eine bogenförmige Dichtfläche aus, die hohe Unterdrücke zum sicheren Festhalten erfordert. Dies führt dazu, dass gerade auf empfindlichen Aluminium- oder auch Glasoberflächen Abdrücke durch die Saugausformungen entstehen können. Jedenfalls ist der Stand der Technik verbesserungsfähig.

Dies gilt auch mit Blick auf die an zweiter Stelle genannte deutsche Offenlegungsschrift 196 53 381. Denn hier sind die Saugausformungen bzw. Saugnäpfe in ihrer Länge steuerbar, und zwar indem die elastischen Saugnäpfe in Richtung auf den Traggurt magnetisch angezogen werden. Eine solche Ausgestaltung überzeugt nicht unbedingt durch eine sichere Funktionsweise. Im Übrigen ist der hierzu korrespondierende Fördergurt aufwendig gestaltet, weil die elastischen Saugnäpfe mit einem Ring aus magnetischem Material verbunden sind. - Hier will die Erfindung insgesamt Abhilfe schaffen.

Der Erfindung liegt das technische Problem zugrunde, einen derartigen Fördergurt so weiterzubilden, dass unter Vermeidung eines Abscherens der Saugausformungen bei geringen Ansaugdrücken ein einwandfreies Festhalten der Werkstücke unter Rückgriff auf eine besonders einfache Konstruktion gelingt.

Zur Lösung dieser Aufgabe schlägt die Erfindung bei einem gattungsgemäßen Fördergurt vor, dass die Saugausformungen mit den Überhanglappen als in Frontansicht des Fördergurtes ovale oder elliptische Saugnäpfe ausgebildet sind. Im Rahmen der vorliegenden Erfindung sind die zurückspringenden Lippen also ausschließlich an die Überhanglappen angeformt bzw. befinden sich an diesen.

Bei den Überhanglappen kann es sich um an kreisrunde Saugglocken angeformte oder mit diesen adhäsiv verbundene Kreissegmentlappen handeln. Diese Kreissegmentlappen weisen in der Regel einen an den Durchmesser der Saugglocken angepassten Innendurchmesser und einen im wesentlichen gleichen Außendurchmesser mit im Vergleich zum Glockenmittelpunkt versetzten Zentrum auf. Dies wird mit Bezug auf die Figurenbeschreibung noch näher erläutert werden. Die zurückspringenden Lippen können mit der Horizontalen einen bestimmten Rücksprungwinkel einschließen. Dieser bewegt sich in der Regel im Bereich zwischen 5° bis 30°. Grundsätzlich sind natürlich auch Werte zwischen 30° und 50° denkbar, so dass insgesamt ein Bereich des Rücksprungwinkels von ca. 5° bis 50° im Rahmen der Erfindung liegt. Vorzugsweise beträgt der Rücksprungwinkel ca. 20°.

Zur Begrenzung des Federweges der Saugausformungen beim Ergreifen und Festhalten der Werkstücke ist weiter vorgesehen, dass die jeweilige Saugausformung innenseitige Noppen aufweist. Die Saugausformungen können an den Gurtkörper angeklippst, angeschweißt oder sonstwie mit diesem verbunden sein. Bei den Überhanglappen handelt es sich in der Regel um mit den Saugglocken einstückige Bestandteile. Selbstverständlich können die Überhanglappen auch adhäsiv mit den Saugglocken verbunden sein.

Schließlich besitzt der Gurtkörper größtenteils längsrandseitige Schutzleisten, welche zumindest über die zurückspringenden Lippen an den Überhanglappen vorkragen. Auf diese Weise wird ein zuverlässiges Abscheren der Saugausformungen verhindert. Denn in (und entgegen) der Transportrichtung der Werkstücke treffen diese (die Werkstücke) auf eine nach hinten gerichtete Kante - nämlich die zurückspringenden Lippen an den Überhanglappen. Dieser Effekt wird durch die vorstehend erwähnten Schutzleisten auf dem Gurtkörper verstärkt. Denn die Schutzleisten sorgen dafür, dass die Werkstücke mit einem vorgegebenen Abstand zum Gurtkörper in Richtung auf die Saugausformungen bewegt werden, sofern derartige Relativbewegungen zwischen Werkstück und Fördergurt überhaupt stattfinden.

Grundsätzlich kann im Rahmen der Erfindung natürlich auch so vorgegangen werden, wie dies in der DE-OS 196 53 381 beschrieben ist. Das heißt, es ist denkbar, die Saugausformungen längenveränderlich auszugestalten, um im Zuge des Anlegens der Werkstücke Abscherungen zu vermeiden. So bietet es sich an, für die Aufnahme der Werkstücke die Saugausformungen gleichsam an den Gurtkörper anzulegen, damit die frontseitige Werkstückkante die Saugausformung nicht hintergreifen kann, sondern vielmehr auf die zurückspringende Lippe an dem Überhanglappen trifft. Eine solche Vorgehensweise ist grundsätzlich denkbar, ohne dass die angesprochenen längsrandseitigen Schutzleisten vorgesehen werden müssen. Vorteilhafterweise wird jedoch auf diese Elemente zurückgegriffen, damit das in DE-GM 299 05 390 beschriebene Abscheren nicht erfolgt.

Im Vergleich zu dieser vorbekannten Lehre hat sich als Pluspunkt im Rahmen der vorliegenden Erfindung herausgestellt, dass das Ansaugen der Werkstücke unverändert mit Hilfe der kreisrunden Saugglocken erfolgt, welche einen definierten (und scharfen) Außenrand aufweisen. Auf diese Weise kann mit relativ geringen Unterdrücken gearbeitet werden, ohne dass es Probleme bei der Aufnahme und beim Anlegen der Werkstücke an den Fördergurt gibt. Dagegen übernehmen die Überhanglappen keinerlei Festhaltefunktion, sondern dienen einzig dem Zweck, eine nach hinten gerichtete Kante für die hiergegen eventuell anstoßenden Werkstücke zur Verfügung zu stellen. Infolge der verringerten Saugleistung werden die Oberflächen der Werkstücke nicht beschädigt, treten insbesondere keine Abdrücke auf.

Dadurch, dass die Saugausformungen bzw. Saugnäpfe geklippst werden können, ist ferner ein schneller und problemloser Austausch für Reparaturzwecke denkbar. Vergleichbares gilt im Hinblick auf eine Anpassbarkeit des Fördergurtes an unter-schiedliche Anforderungen (beispielsweise Gewicht und/oder Oberfläche der Werkstücke).

Durch die den Federweg der Saugausformung begrenzenden Noppen wird schließlich erreicht, dass die Werkstücke gleichsam auf dem Fördergurt "schwimmen" können.

Im Ergebnis überrascht der beschriebene Fördergurt durch konstruktiv einfachen Aufbau und sichere Funktionsweise. Dies läßt sich zum einen darauf zurückführen, dass ein Abscheren der Saugausformungen durch die an den Überhanglappen angebrachten zurückspringenden Lippen vermieden wird. Zum anderen werden die Werkstücke sicher ergriffen und gehalten sowie weitertransportiert, weil mit - im Vergleich zum Stand der Technik nach DE-GM 299 05 390 - (viel) geringerem Unterdruck gearbeitet werden kann. Denn in den Saugglocken werden - unabhängig von den Überhanglappen - definierte Unterdruckverhältnisse eingestellt, die sich reproduzierbar erreichen lassen. Schließlich wird hierdurch eine maximale Schonung des zu transportierenden Gutes erreicht, von welcher der Stand der Technik weit entfernt ist.

Im folgenden wird die Erfindung anhand einer lediglich ein Ausführungsbeispiel darstellenden Zeichnung näher erläutert; es zeigen:
- Fig. 1: den erfindungsgemäßen Fördergurt in Frontansicht,
- Fig. 2: einen Schnitt durch den Gegenstand nach Fig. 1,
- Fig. 3a: den Fördergurt nach den Figuren 1 und 2 ohne angelegtes Werkstück und
- Fig. 3b: den Gegenstand nach Fig. 3a mit angelegtem Werkstück.

In den Figuren ist ein Fördergurt dargestellt, welcher sich zum hängenden oder aufliegenden Unterdrucktransport von Werkstücken W wie Blechen oder Platten eignet. Bei diesen Platten kann es sich auch um Glasplatten handeln. Im Rahmen des Ausführungsbeispiels wird der hängende Unterdrucktransport beschrieben, welcher (beispielsweise bei Stahlplatten) grundsätzlich auch durch ein zusätzliches Magnetfeld flankiert werden kann, wie dies in der einleitend bereits angeführten europäischen Patentanmeldung 0 893 372 oder der europäischen Patentanmeldung 0 893 371 beschrieben ist. Der dargestellte Fördergurt besitzt im grundsätzlichen Aufbau einen Gurtkörper 1 sowie Ansaugöffnungen 2. Diese Ansaugöffnungen 2 stehen mit einer nicht näher spezifizierten Unterdruckvorrichtung in Verbindung. Es wird insofern auf die vorstehend erwähnte europäische Patentanmeldung verwiesen.

Die beschriebenen Ansaugöffnungen 2 münden in frontseitige Saugausformungen 3 und erzeugen hier den erforderlichen Unterdruck zum Festhalten der Werkstücke W. Die Saugausformungen 3 weisen zurückspringende Lippen 4 auf, um ein Abscheren der Saugausformungen 3 im Ganzen zu verhindern, wenn ein Werkstück W an den Fördergurt angelegt wird. Dieses Anlegen der Werkstücke W kann dergestalt geschehen, daß die nicht gezeigte Unterdruckvorrichtung mit dem Fördergurt in Richtung auf die Werkstücke W bewegt wird. Üblicherweise werden jedoch die Werkstücke W mit Hilfe eines Zuführförderers an den Fördergurt angelegt, wie dies beispielhaft in der europäischen Patentanmeldung 0 827 920 A2 dargestellt ist. Jedenfalls ergreift der Fördergurt das Werkstück W und transportiert es zu einer gewünschten Abwurfstelle weiter. Hier wird entweder der erzeugte Unterdruck an den Ansaugöffnungen 2 bzw. Saugausformungen 3 abgeschaltet oder es wird zusätzlich noch mit einem Überdruck das Abwerfen unterstützt.

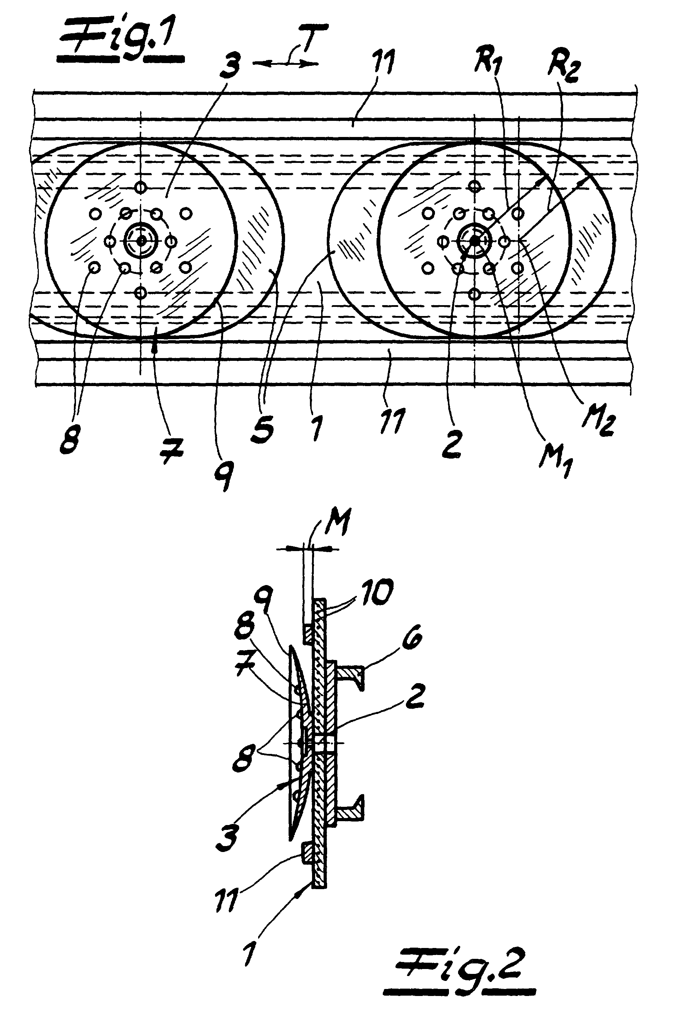

Erfindungsgemäß weisen die Saugausformungen 3 zumindest in Transportrichtung T und entgegen der Transportrichtung T - dargestellt durch einen Doppelpfeil T in Fig. 1 - Überhanglappen 5 mit den zurückspringenden Lippen 4 auf. Aus der vorgenannten Darstellung erkennt man auch, dass die Saugausformungen 3 mit den Überhanglappen 5 als in Frontansicht des Fördergurtes ovale oder elliptische Saugnäpfe 3 ausgebildet sind. Die Frontansicht des Fördergurtes kennzeichnet dabei die Ansicht aus Richtung der Werkstücke W.

An der Rückseite des Fördergurtes sind Dichtlippen 6 vorgesehen, die zur Abdichtung der Saugausformungen 3 bzw. Ansaugöffnungen 2 in einen nicht dargestellten Dichtspalt in der Unterdruckvorrichtung eingreifen. Nach dem Ausführungsbeispiel ist für jede Dichtlippe 6 ein eigener Dichtspalt in der Unterdruckvorrichtung vorgesehen. Der Aufbau und die Funktionsweise sind dabei im Detail so, wie dies in der europäischen Patentanmeldung 0 893 371 beschrieben ist. Auf die dortigen Ausführungen wird verwiesen.

Bei den Überhanglappen 5 handelt sich um an kreisrunde Saugglocken 7 angeformte oder mit diesen adhäsiv verbundene Kreissegmentlappen 5. Die einzelnen topologischen Verhältnisse werden anhand der Fig. 1 deutlich. So besitzt die Saugglocke 7 einen vorgegebenen Radius R₁. Dieser Radius R₁ entspricht - ausgehend vom zugehörigen Mittelpunkt M₁ der Saugglocke 7 - dem Innendurchmesser bzw. Innenradius des zugehörigen Überhanglappens bzw. Kreissegmentlappens 5. Der Außendurchmesser bzw. Außenradius R₂ des Kreissegmentlappens 5 kann natürlich grundsätzlich einen anderen Wert als der Radius R₁ einnehmen. Nach dem Ausführungsbeispiel gilt jedoch R₁ ≈ R₂. Zu beachten ist dabei lediglich, dass der Radius R₂ von einem Mittelpunkt (Zentrum) M₂ aus beschrieben wird, welcher im Vergleich zum vorerwähnten Glockenmittelpunkt M₁ in Transportrichtung T versetzt ist.

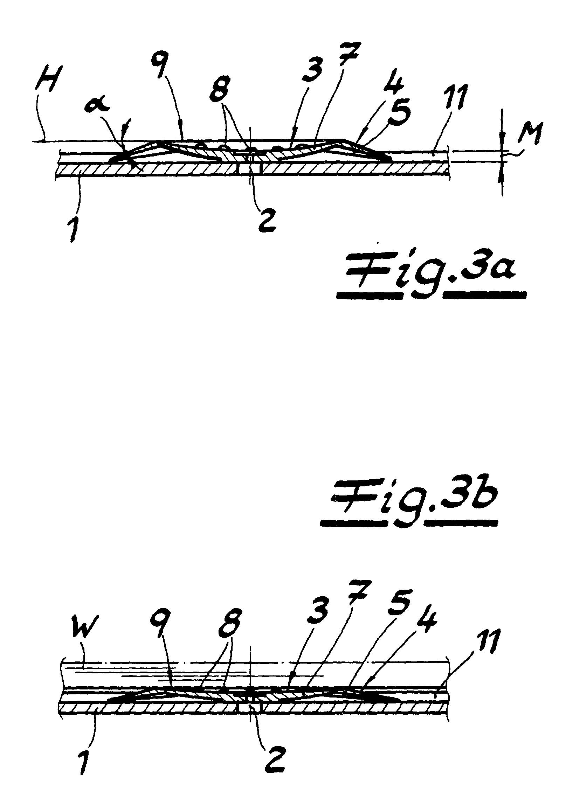

Anhand der Fig. 3a erkennt man, dass die zurückspringenden Lippen 4 mit einer Horizontalen H einen bestimmten Rücksprungwinkel a einschließen. Dieser kann Werte zwischen 5° und 50°, insbesondere zwischen 10° und 30° einnehmen. Nach dem Ausführungsbeispiel ist er zu ca. 20° bemessen. Zusätzlich besitzt die Saugausformung 3 innenseitige Noppen 8, welche zur Begrenzung des Federweges dienen. Denn nachdem die Werkstücke entsprechend Fig. 3b angesaugt worden sind, liegen sie zum einen auf scharfen Rändern 9 der kreisrunden Saugglocken 7, zum anderen auf eben diesen Noppen 8 auf. Hierdurch wird ein gleichsam "Schwimmen" der Werkstücke W auf dem Fördergurt bei unverändert einwandfreier Fixierung erreicht. Abdrücke oder sonstige Beschädigungen der Oberfläche der Werkstücke W sind ausgeschlossen.

Die Saugausformungen 3 sind nach dem Ausführungsbeispiel aus Polyurethan gefertigt und weisen eine Shore-A-Härte von ca. 55 auf. Sie sind an den Gurtkörper 1 angeschweißt, können aber auch auf- bzw. angeklippst sein. Dabei sorgen zusätzliche Stahllitzen 10 in Längsrichtung des Gurtkörpers 1 für dessen Stabilität in ebendieser Richtung, welche mit der Transportrichtung T zusammenfällt.

Schließlich weist der Gurtkörper 1 längsrandseitige Schutzleisten 11 auf, welche ausweislich der Figuren 3a, 3b und 2 zumindest über die zurückspringenden Lippen 4 um ein vorgegebenes Maß M vorkragen. Auf diese Weise wird erreicht, dass in Transportrichtung T ein auf diesen Schutzleisten 11 aufliegendes Werkstück W auf eine zurückspringende Kante in Form der Lippen 4 auftrifft, wie dies in der Fig. 3a dargestellt ist. Ein Abscheren der Saugausformungen 3 kann also nicht stattfinden.

## Patentansprüche

1. Fördergurt zum insbesondere hängenden Unterdrucktransport von Werkstücken (W) wie Blechen oder Platten, mit einem Gurtkörper (1) mit Ansaugöffnungen (2), welche mit einer Unterdruckvorrichtung in Verbindung stehen, und mit frontseitigen Saugausformungen (3), welche zumindest in Transportrichtung (T) der Werkstücke (W) Überhanglappen (5) mit zurückspringenden Lippen (4) aufweisen, **dadurch gekennzeichnet, dass** die Saugausformungen (3) mit den Überhanglappen (5) als in Frontansicht des Fördergurtes ovale oder elliptische Saugnäpfe (3) ausgebildet sind.

2. Fördergurt nach Anspruch 1, **dadurch gekennzeichnet, dass** die Überhanglappen (5) als an kreisrunde Saugglocken (7) angeformte oder mit diesen adhäsiv verbundene Kreissegmentlappen (5) ausgebildet sind.

3. Fördergurt nach Anspruch 1 oder 2, **dadurch gekennzeichnet, dass** die Kreissegmentlappen (5) einen an den Radius (R₁) der Saugglocken (7) angepassten Innendurchmesser und einen im wesentlichen gleichen Außenradius (R₂) mit im Vergleich zum Glockenmittelpunkt (M₁) versetzten Zentrum (M₂) aufweisen.

4. Fördergurt nach einem der Ansprüche 1 bis 3, **dadurch gekennzeichnet, dass** die zurückspringenden Lippen (4) einen Rücksprungwinkel (α) mit der Horizontalen (H) von ca. 5° bis 50°, insbesondere ca. 10 bis 30°, vorzugsweise ca. 20°, einschließen.

5. Fördergurt nach einem der Ansprüche 1 bis 4, **dadurch gekennzeichnet, dass** die Saugausformungen (3) innenseitige Noppen (8) zur Begrenzung des Federweges aufweisen.

6. Fördergurt nach einem der Ansprüche 1 bis 5, **dadurch gekennzeichnet, dass** die Saugausformungen (3) angeklippst, angeschweißt oder sonstwie mit dem Gurtkörper (1) verbunden sind.

7. Fördergurt nach einem der Ansprüche 1 bis 6, **dadurch gekennzeichnet, dass** der Gurtkörper (1) längsrandseitige Schutzleisten (11) aufweist, welche zumindest über die zurückspringenden Lippen (4) an den Überhanglappen (5) vorkragen.

## Claims

1. A conveyor belt especially for the suspended suction transport of articles (W), such as sheets of metal or plates, using a belt body (1) with suction openings (2) that are connected to a negative pressure, and with suction shapes (3) which at least in the direction of transport (T) of the articles (W) are furnished with overhanging lobes (5) including kinked-back lips (4), **characterised in that** the suction shapes (3) together with the overhanging lobes (5) form oval or elliptical suction cups (3) in a plan view of the conveyor belt.

2. The conveyor belt according to claim 1, **characterised in that** the overhanging lobes (5) are an extension of the circular suction bells (7) or are formed as circle segment lobes (5) adhesively bonded to them.

3. The conveyor belt according to claims 1 or 2, **characterised in that** the circle segment lobes (5) have an internal diameter adapted to the radius (R₁) of the suction bells (7) and an essentially the same external radius (R₂) with a centre (M₂) offset relative to the bell centre (M₁).

4. The conveyor belt according to claims 1 to 3, **characterised in that** the kinked-back lips (4) include a return angle (α) with the horizontal (H) of ca. 5° to 50°, in particular 10° to 30°, preferably ca. 20°.

5. The conveyor belt according to claims 1 to 4, **characterised in that** the suction shapes (3) have internally placed bumps (8) for limiting the spring travel path.

6. The conveyor belt according to claims 1 to 5, **characterised in that** the suction shapes (3) are clipped, welded or otherwise attached to the belt body (1) .

7. The conveyor belt according to claims 1 to 6, **characterised in that** the belt body (1) has protective strips (11) along the length of its edges, which project at least above the kinked-back lips (4) on the overhanging lobes (5).

## Revendications

1. Convoyeur pour en particulier le transport en hauteur en dépression de pièces usinées (W) comme des tôles ou des plaques, avec une bande transporteuse (1) comportant des orifices d'aspiration (2), qui sont en liaison avec un dispositif de dépression, et des déformations pour l'aspiration (3) sur la face frontale, qui présentent, du moins dans le sens de transport (T) des pièces (W), des lobes en surplomb (5) avec des lèvres rentrantes (4), **caractérisé en ce que** les déformations pour aspiration (3) avec leurs lobes en surplomb (5) se présentent, en vue frontale de la bande transporteuse, comme des ventouses (3) ovales ou elliptiques.

2. Convoyeur selon la revendication 1, **caractérisé en ce que** les lobes en surplomb (5) se présentent comme des lobes en segment de cercle (5) formés sur des boucles d'aspiration circulaires (7) ou reliés à celles-ci par adhésif.

3. Convoyeur selon la revendication 1 ou 2, **caractérisé en ce que** les lobes en segment de cercle (5) présentent un diamètre intérieur adapté au rayon (R₁) des boucles d'aspiration (7) et un rayon extérieur (R₂) approximativement identique avec un centre (M₂) décalé par rapport au centre de la cloche (M₁).

4. Convoyeur selon une des revendications 1 à 3, **caractérisé en ce que** les lèvres rentrantes (4) forment un angle rentrant (α) avec l'horizontale (H) d'environ 5° à 50°, en particulier d'environ 10 à 30°, de préférence environ 20°.

5. Convoyeur selon une des revendications 1 à 4, **caractérisé en ce que** les déformations pour l'aspiration (3) présentent sur leur côté intérieur des proéminences (8) pour limiter la course du ressort.

6. Convoyeur selon une des revendications 1 à 5, **caractérisé en ce que** les déformations pour l'aspiration (3) sont enclenchées, soudées ou reliées d'une autre manière à la bande transporteuse (1).

7. Convoyeur selon une des revendications 1 à 6, **caractérisé en ce que** la bande transporteuse (1) présente sur ses bords des baguettes protectrices (11) qui débordent au moins au dessus des lèvres rentrantes (4) sur les lobes en surplomb (5).
